## Europäisches Patentamt

## European Patent Office

## Office européen des brevets

(11) Publication number: **0 263 824**
**B1**

(12) **EUROPEAN PATENT SPECIFICATION**

(45) Date of publication of patent specification: **16.01.91**

(51) Int. Cl.⁵: **A 01 B 73/04,** A 01 B 29/00

(21) Application number: **86903710.1**

(22) Date of filing: **19.06.86**

(86) International application number:
**PCT/SE86/00298**

(87) International publication number:
**WO 86/07522 31.12.86 Gazette 86/28**

(54) **ARRANGEMENT INCLUDING A ROLLER WITH A NUMBER OF FOLDING OUTER SECTIONS.**

(30) Priority: **20.06.85 SE 8503076**

(43) Date of publication of application:
**20.04.88 Bulletin 88/16**

(45) Publication of the grant of the patent:
**16.01.91 Bulletin 91/03**

(84) Designated Contracting States:
**AT BE CH DE FR GB IT LI LU NL SE**

(56) References cited:
**DE-A-3 342 962**
**DE-B-1 197 262**

(73) Proprietor: **RANFLO FÖRSÄLJNINGS AB**
**Larv**
**S-530 10 Vedum (SE)**

(72) Inventor: **LILJA, Ingemar**
**Siggesgaorden**
**Edsvära S-535 00 Kväänum (SE)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

## Description

The present invention relates to an arrangement including a roller according to the preamble of patent claim 1.

From the DE—A1—3 342 962 a roller device having arms which are connected by a double joint and two meshing gears is known. The arms can be pivoted relative to one another by a jack.

In the DE—B 1 197 262 a harrow device is shown having swingably connected frame arms, which can be pivoted relative to one another and relative to the main frame of the harrow device by means of a jack and a chain.

The principal object of the present invention is in the first place to provide an arrangement in accordance with the present invention which affords the possibility of achieving by simple means the safe and effective folding down and folding up of the various moving sections of the roller, without the risk of the ends of the outer roller sections scraping the ground during said folding movements.

Said object is achieved by means of an arrangement having the features of the characterizing portion of patent claim 1.

The invention is described below as a preferred illustrative embodiment, in conjunction with which reference is made to the drawings, in which

Fig. 1 shows the roller in its fully folded position;

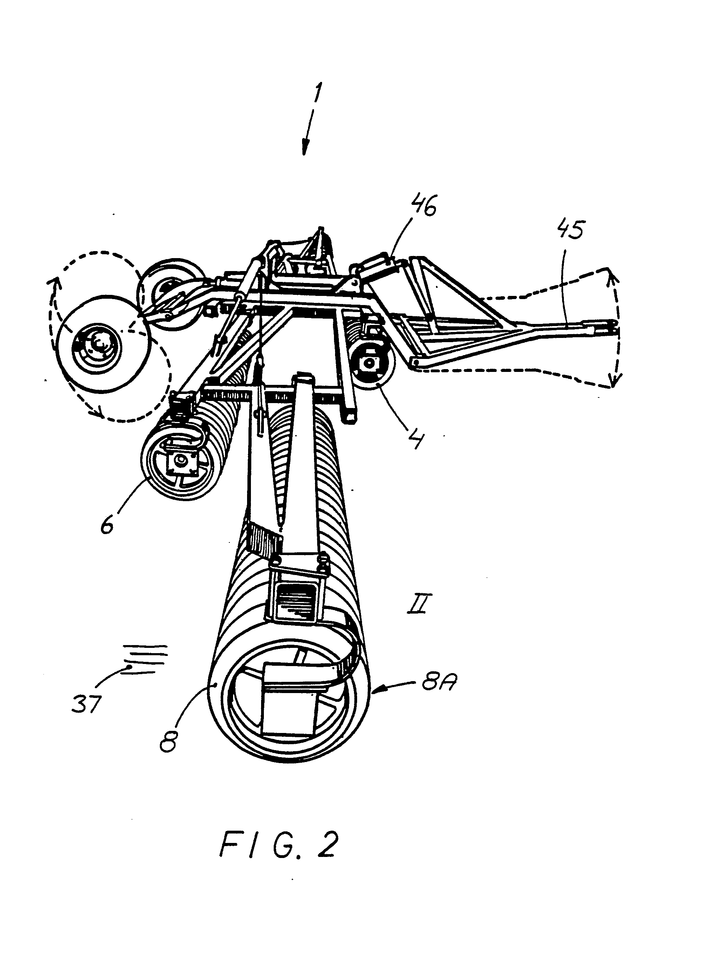

Fig. 2 shows the roller in its fully open position;

Fig. 3 shows the actual mechanism for producing folding movements for the roller sections retained in a transport position; and

Fig. 4 shows a part of the mechanism retained in a partially folded-down position.

A roller 1, which contains a mechanism arrangement 2 of the kind proposed in accordance with the present invention, exhibits in a previously disclosed fashion a main frame 3, which supports a fixed roller section 4, and a number of roller sections 5, 6, 7, 8 which are capable of moving between a so-called "transport position" I and an operating "position II", which sections are also capable of being supported by the main frame 3. The mechanism 2 is so arranged as to act between the main frame 3 and inner and outer side roller frame sections 9, 10 and 11, 12 intended for each moving roller section 5—8, and consists of a number of swinging arms 13, 14. Said swinging arms 13, 14, which are preferably double-armed, are pivotally mounted on either side 3A and 3B of the main frame, and preferably in such a way as to be capable of pivoting each about its own bearing shaft 15 and 16.

Each swinging arm 13, 14 is connected on the one hand 13A and 14A to the respective inner side frame section 9 and 10 via a jack 17 and 18 for the purpose, on actuation of said lifting jacks 17 and 18, which are preferably executed as fluid-operated, and appropriately as hydraulically-operated piston cylinders, of causing said side frame sections 9—10 to pivot about pivoting bearing shafts 19 and 20 connected to the main frame 3. On the other hand 13B and 14B each swinging arm 13, 14 is connected to each outer side frame section 11, 12, which are preferably capable of pivoting about a pivoting shaft 21 and 22 situated between the inner and outer side frame section 9, 11 and 10, 12, via a drawing device 23 and 24 preferably executed as a cable or similar, the purpose of which is to enable the respective side frame sections 9, 11 and 10, 12 to be caused to pivot relative to one another. Said cables, etc., 23, 24 are each routed over their own deflector 25, 26 situated between the inner and the outer side frame sections 9, 11 and 10, 12 respectively and executed appropriately as a curved and preferably sector-shaped, grooved cable guide.

The mechanism 2 also includes push-rods 27, 28, in conjunction with which that end 13B, 14B of the respective swinging arms to which said cables, etc., 23, 24 are connected, is connected to a push-rod 27, 28 via, for example, a pivoting link, etc., 29, 30, which is appropriately guided by a preferably tubular rod guide 31, 32 connected to the main frame 3.

Said push-rods 27, 28 are capable of being actuated via a stop 33 and 34 situated at the free end 27A, 28A of each rod by inner side frame sections 9, 10 situated on the opposite side of the respective associated swinging arms 13, 14. Said stops 33, 34 may suitably take the form of screw or nut devices capable of moving in the longitudinal sense of the respective rod, which devices, as they are displaced along the associated rod 27, 28, permit the effective length of the rod to be increased or reduced for the purpose of adjusting the degree of pivoting of said interacting side frame section 9 and 10.

Said stops 33, 34 can be so arranged as to interact with the contact surface 35 and 36 situated on the respective inner side frame section 9, 10.

The lifting jacks 17, 18 and the drawing devices 23, 24, which together with the associated swinging arm 13, 14 and side frame sections 9—12 each form their own loop, are so executed that the side frame sections 9—12, when they are to be folded up with their associated roller sections 5—8 from the folded-down "operating position" II of the roller, are first raised by their outer end 5A and 8A from the ground 37 along which the roller 1 is working before the side frame sections 9—12 are folded up with the associated roller sections 5—8. In this case the drawing devices 23, 24 may exhibit, for example in the area of the connections 38, 39 between the drawing device 23, 24 and the inner side frame section 9, 10, a turnbuckle 40, 41 or some other tensioning device with the help of which the effective length of the drawing devices can be varied as required.

The roller 1 is so arranged as to be capable of being raised for transport by means of folding wheels 42, 43 which are actuated by a hydraulic cylinder, etc., 44 and is also so arranged that the pull on the associated drawbar 45 can be varied with the help of an additionally provided hydraulic cylinder, etc., 46.

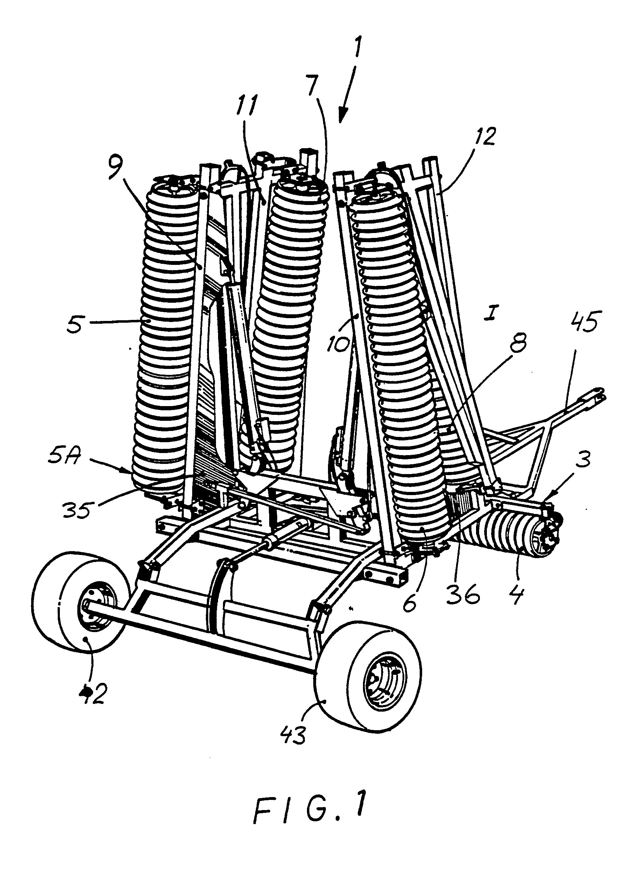

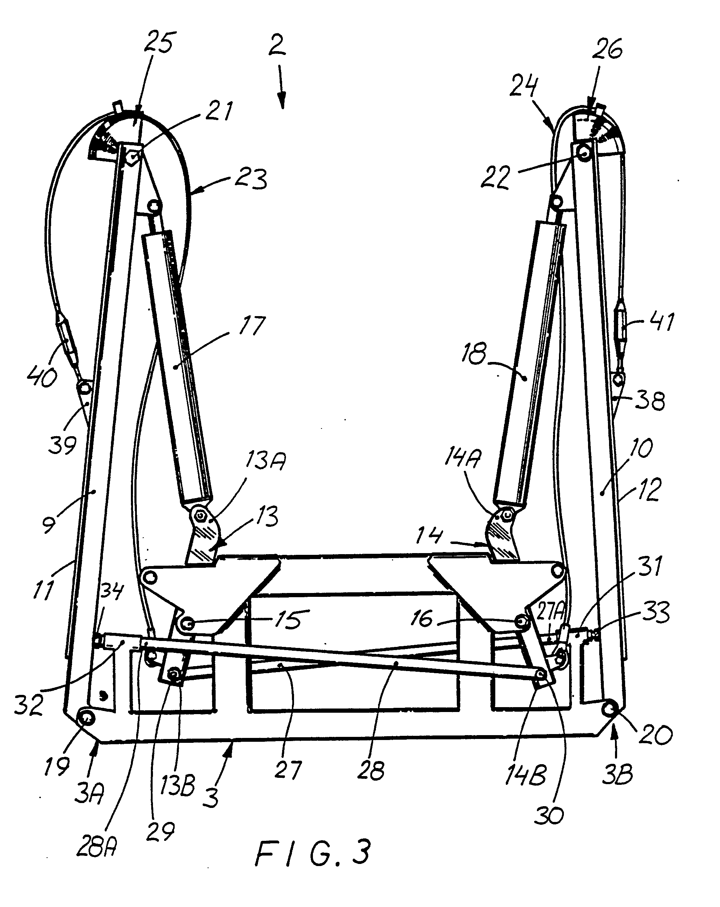

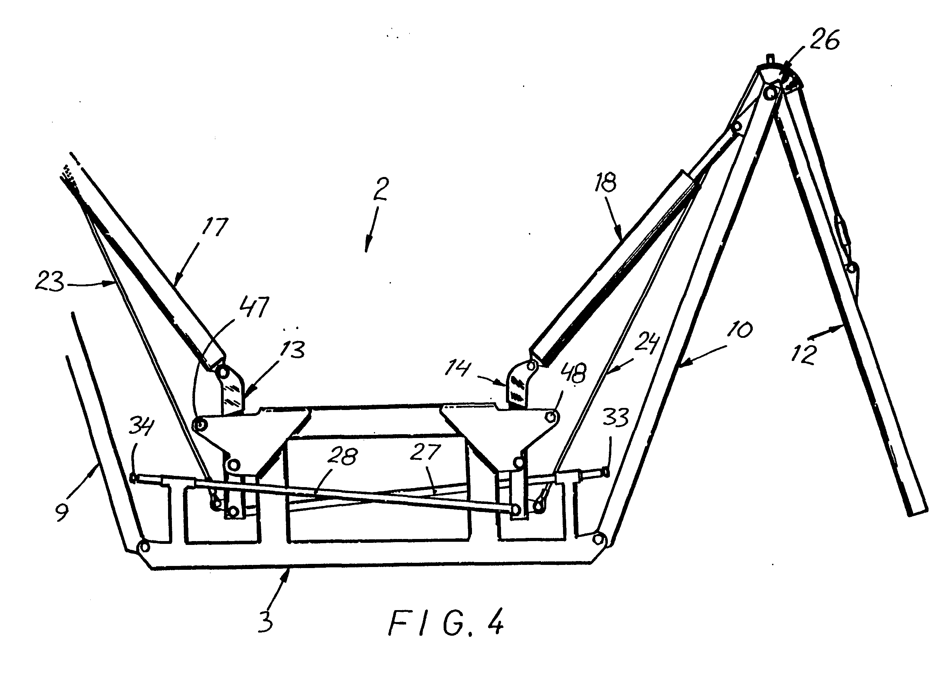

The function of the roller arrangement described above should have become apparent from the above description, although it may briefly be stated that, when the roller frame sections 9—12 and their associated roller sections 5—8 are to be folded down, these are caused to pivot simultaneously about appropriate pivot bearings 19, 20 and 21, 22 by extending the lifting jacks 17, 18 with the outer ends 5A, 8A raised so that they are removed from contact with the ground 37, prior to being lowered fully to the ground during the final phase of the folding-down operation, in which position the swinging arms are pivoted outwards into their end position until contact occurs with stops 47, 48. When the roller 1 is to be folded up, the outer ends 5A, 8A of the roller sections 5, 8 are first raised in the manner described above by causing the lifting jacks 17, 18 to contract, utilizing the effect of the drawing elements 23, 24, whereupon all the moving frame sections 9—12 are pivoted together. After having reached the position of the frame sections 9, 10 illustrated in Fig. 4, these will actuate a push-rod 27, 28 connected to each of the corresponding opposite swinging arm 13, 14, so that the swinging arms 13, 14 are caused to pivot over distinctly to the end position illustrated in Fig. 3, whereupon the frame sections 9—12 are pivoted together further into the position I illustrated in Fig. 1.

## Claims

1. Arrangement including a roller (1) exhibiting a number of roller sections (5—8) capable of moving between a transport position (I) and an operating position (II), which roller sections (5—8) are capable of being supported by a main frame (3), whereby a mechanism is arranged in such a way as to act between the main frame (3) and each of the roller side frame sections (9—12), said mechanism (2) comprising a jack (17, 18) at one end connected to an inner side frame section (9, 10) for the purpose of causiong each inner side frame section (9, 10) to pivot relative to the main frame (3), the mechanism further comprising drawing devices (23, 24) at one end connected to an outer side frame section (11, 12) capable of pivoting relative to said inner side frame section for the purpose of causing the side frame sections (9—12) to pivot relative to one another, characterized by a pivoting swinging arm (13, 14) situated on each side (3A, 3B) of the main frame (3), which arm at one end is connected to the other end of the jack (17, 18) and at the other end is connected to the other end of the drawing devices (23, 24).

2. Arrangement according to Patent Claim 1, characterized in that the drawing device (23, 24) consists of a cable or similar which is routed over a deflector (25, 26) situated between the inner and outer side frame section (9, 11 and 10, 12).

3. Arrangement according to Patent Claim 2, characterized in that the deflector (25, 26) is in the form of a curved and preferably sector-shaped, grooved cable guide.

4. Arrangement according to any of the preceding Patent Claims, characterized in that each swinging arm (13, 14) is double-armed.

5. Arrangement according to Patent Claim 4, characterized in that the end (13B, 14B) of each swinging arm (13, 14) to which the drawing device (23, 24) is connected is itself connected to a push-rod (27, 28) which is capable of being actuated by the inner side frame section (9, 10) situated on the opposite side.

6. Arrangement according to any of the preceding Patent Claims, characterized in that the hydraulic lifting jacks (17, 18) and the drawing devices (23, 24) are so executed that the side frame sections (9—12), when they are to be folded up with their associated roller sections (5—8), are first raised by their outer end from the ground (37) before being folded up.

## Patentansprüche

1. Anordnung mit einer Walze (1), die eine Anzahl von zwischen einer Transportposition (I) sowie einer Arbeitsposition (II) bewegbaren Walzensektionen (5—8) aufweist, wobei diese Walzensektionen (5—8) für eine Lagerung durch einen Hauptrahmen (3) getragen sind und ein Mechanismus derart angeordnet ist, daß er zwischen dem Hauptrahmen (3) sowie jedem der walzenseitigen Rahmenteile (9—12) wirkt, der genannte Mechanismus (2) eine Hebevorrichtung (17, 18) umfaßt, welche an einem Ende mit einen innenseitigen Rahmenteil (9, 10) zum Zweck des Herbeiführens eines Schwenkens eines jeden innenseitigen Rahmenteils (9, 10) mit Bezug zum Hauptrahmen (3) verbunden ist, und der Mechanismus ferner Zugvorrichtungen (23, 24) umfaßt, die an einem Ende mit einen außenseitigen Rahmenteil (11, 12) verbunden sind, das zu einem Schwenken mit Bezug zum erwähnten innenseitigen Rahmenteil zum Zweck des Herbeiführens eines Schwenkens der Seitenrahmenteile (9—12) mit Bezug zueinander imstande ist, gekennzeichnet durch einen drehbaren Schwenkarm (13, 14), der an jeder Seite (3A, 3B) des Hauptrahmens (3) angeordnet ist, wobei dieser Arm am einen Ende mit dem anderen Ende der Hebevorrichtung (17, 18) verbunden ist und am anderen Ende an das andere Ende der Zugvorrichtungen (23, 24) angeschlossen ist.

2. Anordnung nach Patentanspruch 1, dadurch gekennzeichnet, daß die Zugvorrichtung (23, 24) aus einem Kabel oder dergleichen besteht, das über eine zwischen dem innen- und außenseitigen Rahmenteil (9, 11 und 10, 12) angeordnete Umlenkeinrichtung (25, 26) geführt ist.

3. Anordnung nach Patentanspruch 2, dadurch gekennzeichnet, daß die Umlenkeinrichtung in Gestalt einer gekrümmten und vorzugsweise sektorförmigen, ausgekehlten Kabelführung ausgebildet ist.

4. Anordnung nach irgendeinem der vorhergehenden Patentansprüche, dadurch gekennzeichnet, daß jeder Schwenkarm (13, 14) zweiarmig ist.

5. Anordnung nach Patentanspruch 4, dadurch gekennzeichnet, daß das Ende (13B, 14B) eines jeden Schwenkarmes (13, 14), an welchem die Zugvorrichtung (23, 24) angeschlossen ist, seinerseits mit einer Schubstange (27, 28) verbunden ist, die imstande ist, von dem auf der entgegengesetzten Seite angeordneten innenseitigen Rahmenteil (9, 10) betätigt zu werden.

6. Anordnung nach irgendeinem der vorhergehenden Patentansprüche, dadurch gekennzeichnet, daß die hydraulischen Hebevorrichtungen (17, 18) und die Zugvorrichtungen (23, 24) so betätigt werden, daß die seitlichen Rahmenteile (9—12), wenn sie mit ihren zugeordneten Walzensektionen (5—8) zusammenzuklappen sind, zuerst mit ihrem äußeren Ende vom Erdboden (37) vor dem Zusammenklappen angehoben werden.

**Revendications**

1. Dispositif comprenant un chariot (1) présentant un certain nombre de sections (5—8) susceptibles de se déplacer entre une position de transport (I) et une position de fonctionnement (II), ces sections de chariots (5—8) étant susceptibles d'être portées par un châssis principal (3), par le fait qu'un mécanisme est disposé de façon telle qu'il agisse entre le châssis principal (3) et chacune des sections latérales de châssis (9 à 12), ledit mécanisme (2) comprenant un vérin (17, 18), sur une extrémité reliée à une section intérieure latérale (9, 10), afin de faire pivoter chaque section intérieure latérale de châssis (9, 10) par rapport au châssis principal (3), le mécanisme comprenant en outre des dispositifs de traction (23, 24) placés sur une extrémité reliée à une section extérieure latérale de châssis (11, 12) susceptible de pivoter par rapport à ladite section intérieure latérale de châssis afin de faire pivoter les unes par rapport aux autres les sections latérales de châssis (9 à 12), caractérisé par un bras oscillant de pivotement (13, 14) situé sur chaque côté (3A, 3B) du châssis principal (3), une extrémité de ce bras étant reliée à l'autre extrémité du vérin (17, 18) et l'autre extrémité du bras étant reliée à l'autre extrémité des dispositifs de traction (23, 24).

2. Dispositif selon la revendication 1, caractérisé en ce que le dispositif de traction (23, 24) consiste en un câble ou moyen analogue, acheminé en passant sur un déflecteur (25, 26) situé entre les sections de châssis latérales intérieure et extérieure (9, 11 et 10, 12).

3. Dispositif selon la revendication 2, caractérisé en ce que le déflecteur (25, 26) est en forme de guide de câble rainuré, courbé et de préférence en forme de secteur.

4. Dispositif selon chacune des revendications précédentes, caractérisé en ce que chaque bras oscillant (13, 14) est un bras double.

5. Dispositif selon la revendication 4, caractérisé en ce que l'extrémité (13B, 14B) de chaque bras oscillant (13, 14) auquel est relié le dispositif de traction (23, 24) est lui-même relié à une barre de poussée (27, 28) susceptible d'être actionnée par la section intérieure latérale de châssis (9, 10) située sur le côté opposé.

6. Dispositif selon chacune des revendications précédentes, caractérisé en ce que les vérins de levage hydrauliques (17, 18) et les dispositifs de traction (23, 24) sont réalisés de façon telle que les sections latérales de châssis (9—12), quand elles doivent être repliées avec leurs sections de chariots associées (5—8), sont d'abord élevées du sol (37) par leur extrémité extérieure avant d'être repliées.

FIG.1

1

46

45

4

6

II

37

8A

8

# FIG. 2

FIG. 3

FIG. 4